# FASCICULE DE BREVET EUROPEEN

(11) **EP 1 622 339 B1**
(45) Date de publication et mention de la délivrance du brevet: **09.09.2009**
(21) Numéro de dépôt: 05291538.6
(22) Date de dépôt: 19.07.2005
(51) Int. Cl.: H04L 29/06, G06F 17/30

(54) **Procédé et dispositif de distinction de requêtes HTTP utilisateur**
Verfahren und Vorrichtung zum Auseinanderhalten von HTTP Teilnehmeraufträgen
Method and device for distinguishing HTTP user requests

(30) Priorité: 29.07.2004 FR 0408410
(43) Date de publication de la demande: 01.02.2006
(73) Titulaire: FRANCE TELECOM, 75015 Paris (FR)
(72) Inventeur: Boutroux, Anne, 14880 Hermanville sur Mer (FR); Goutard, Cédric, 14440 Douvres la Delivrance (FR)
(74) Mandataire: Joly, Jean-Jacques

(56) Documents cités:
- WO-A-02/48830
- FR-A- 2 823 044
- US-A- 6 052 730
- US-A1- 2003 191 801

## Description

La présente invention concerne le domaine de la communication entre des équipements d'un réseau de télécommunication de type Internet, notamment entre un dispositif client et un serveur Web.

L'invention concerne plus particulièrement un procédé et un dispositif de distinction de requêtes HTTP émises sur un réseau de télécommunication d'un dispositif client équipé d'un navigateur vers un serveur Web. Un tel procédé et dispositif est connu de US 2003/0191801 A1.

La communication entre un dispositif client et un serveur Web est en effet basée sur le protocole HTTP (acronyme anglo-saxon pour "Hyper Text Transfert Protocol"). Dans la pratique, le protocole HTTP permet d'accéder, via le réseau de télécommunication, à des fichiers, essentiellement au format HTML ("Hyper Text Markup Language"), lesquels sont identifiés par une adresse unique appelée URL ("Uniform Resource Locator"). Le protocole HTTP permet ainsi d'échanger des fichiers HTML entre un dispositif client et un serveur Web.

Le dispositif client doit alors être équipé d'une ressource spécifique, appelée navigateur ("Browser" en anglais), qui est le logiciel client capable d'interroger les serveurs Web, d'exploiter leurs résultats et de mettre en page les informations grâce aux instructions contenues dans la page HTML.

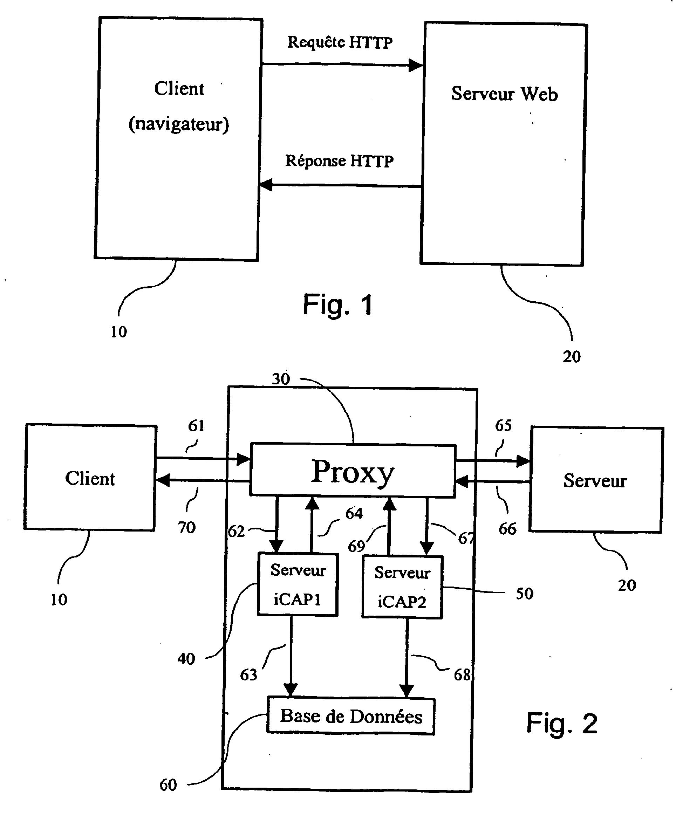

Lorsqu'un navigateur effectue une requête, typiquement par saisie ou clic d'un URL par un utilisateur, la communication entre le navigateur et le serveur Web se déroule de la façon suivante, comme illustré schématiquement à la figure 1 :
- les données de requête sont envoyées au serveur 20 par le dispositif client 10 sous forme d'une méthode d'accès, d'une URL, d'une version de protocole et d'en-têtes de requête HTTP, permettant notamment d'identifier le fichier demandé, l'adresse IP du demandeur, etc.
- lorsque le serveur 20 reçoit la requête HTTP, il traite la requête en analysant la méthode d'accès, l'URL, la version de protocole et les en-têtes HTTP, notamment l'élément permettant de localiser le fichier demandé, puis envoie une réponse HTTP au dispositif client (le navigateur).

Un serveur proxy peut également être mis en oeuvre dans le cadre de la communication HTTP entre le dispositif client et le serveur Web. Ainsi, lorsqu'un utilisateur se connecte à Internet à l'aide d'un navigateur configuré pour utiliser un serveur proxy, celui-ci va se connecter en premier lieu au serveur proxy et lui donner sa requête. Le serveur proxy va alors se connecter au serveur que le navigateur cherche à joindre et lui transmettre la requête. Le serveur va ensuite donner sa réponse au proxy, qui va à son tour la transmettre au navigateur.

Le dispositif client 10 est typiquement un ordinateur, mais peut être remplacé par tout autre équipement apte à envoyer une requête HTTP, de même le serveur proxy peut être remplacé par un routeur ou par tout autre équipement du réseau Internet.

La page HTML reçue en réponse par le navigateur et qui correspond à l'URL demandée par l'utilisateur, comprend également une pluralité d'objets prévus pour satisfaire à des besoins d'affichage et de mise en page par exemple et qui découlent d'une interprétation du code HTML reçu par le navigateur. En effet, dans le code HTML de la page demandée par l'utilisateur, se trouvent les références aux objets qui permettent de constituer la page.

Ces objets peuvent être des images, des logos ou encore des feuilles de style.

Tous ces différents objets dans la page n'ont donc pas été obtenus à la demande explicite de l'utilisateur, c'est-à-dire par la saisie d'une URL par l'utilisateur dans le navigateur ou par l'activation d'un lien hypertexte effectuée par l'utilisateur, mais correspondent en fait à des URL demandées de manière implicite par le navigateur lors de l'affichage et de la mise en page de la page Web.

On peut donc distinguer les requêtes HTTP émises explicitement par l'utilisateur (saisie d'une URL dans le navigateur ou clic sur un lien hypertexte), des requêtes HTTP implicitement émises par le navigateur, par exemple à des fins d'affichage et de mise en page, et qui sont la conséquence de la première requête explicite de l'utilisateur. Une telle distinction est divulguée par le brevet US 6 052 730.

Actuellement, le protocole HTTP ne dispose d'aucune spécification standard ni ne prévoit d'implémentation permettant à un navigateur d'effectuer une telle distinction entre les requêtes HTTP explicites de l'utilisateur et requêtes « implicites » générées par le navigateur lors de l'affichage et de la mise en page d'une page Web.

Or, les requêtes implicitement émises par le navigateur peuvent être considérées comme du bruit et freinent la mise en place de services à valeur ajoutée dans le réseau basés sur une analyse et un suivi des requêtes utilisateurs. Les requêtes implicites sont ainsi inévitablement répertoriées et empêchent d'obtenir une représentation suffisamment exploitable des informations de navigation de l'utilisateur internaute, pour un service de profilage par exemple.

Aussi, un but de la présente invention est de remédier à ces inconvénients en permettant de réaliser la distinction, à des fins d'exploitation dans le réseau, entre les requêtes explicites de l'utilisateur et les requêtes implicites du navigateur.

Avec cet objectif en vue, l'invention a pour objet un procédé selon la revendication 1.

Une requête HTTP émise explicitement par l'utilisateur correspond à la saisie par l'utilisateur d'une adresse URL dans le navigateur ou à une activation d'un lien hypertexte effectuée par l'utilisateur.

Selon un mode de réalisation, le marquage de la requête HTTP est réalisé par le navigateur du dispositif client.

Selon un autre mode de réalisation le marquage de la requête HTTP est réalisé par un service-intégré au réseau.

Selon ce dernier mode de réalisation, le service intégré au réseau met en oeuvre les étapes suivantes consistant à :
a- recevoir une première requête HTTP du dispositif client;
b- marquer ladite requête ;
c- transmettre ladite requête vers le serveur;
d- recevoir la réponse HTTP correspondante du serveur ;
e- mémoriser dans une base de données les URL correspondant à des objets inclus dans ladite réponse susceptibles de conduire à des requêtes HTTP demandées implicitement par le navigateur ;
f- transmettre ladite réponse au dispositif client et,
g- pour chaque requête HTTP suivante reçue du dispositif client et non référencée dans ladite base de données, réitérer les étapes b à g.

De préférence, une date de péremption est associée à chaque URL mémorisée dans la base de données, et on supprime toutes les URL dans la base de données dont la date de péremption associée est dépassée.

Avantageusement, l'adresse IP du dispositif client est associée à chaque URL mémorisée dans la base de données.

De préférence, le marquage de la requête HTTP consiste en l'ajout d'un en-tête spécifique dans ladite requête HTTP.

L'invention concerne encore un dispositif de distinction de requêtes HTTP émises sur un réseau de télécommunication d'un dispositif client équipé d'un navigateur vers un serveur Web, caractérisé en ce qu'il comprend :
- un équipement de réseau apte à recevoir des requêtes HTTP du dispositif client et à les transmettre vers le serveur Web et à recevoir les réponses correspondantes du serveur et à les transmettre vers le dispositif client,
- un module de traitement des réponses reçues du serveur Web par ledit équipement de réseau, comprenant des moyens pour déterminer les URL correspondant à des objets inclus dans lesdites réponses susceptibles de conduire à des requêtes HTTP demandées implicitement par le navigateur,
- une base de données pour mémoriser lesdites URL, et
- un module de traitement des requêtes reçues du dispositif client par ledit équipement de réseau, comprenant des moyens pour marquer lesdites requêtes si elles ne sont pas référencées dans ladite base de données.

Selon un mode de réalisation, le module de traitement des requêtes HTTP comprend un serveur iCAP et le module de traitement des réponses HTTP comprend un serveur iCAP.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1, déjà décrite, illustre de façon schématique le processus de communication entre un dispositif client et un serveur Web selon le protocole HTTP, et
- la figure 2 illustre un mode de réalisation de l'invention.

Selon un premier mode de réalisation de l'invention, lorsque la requête HTTP fait suite à une action de l'utilisateur sur le navigateur, ce dernier est prévu pour marquer la requête avant de l'envoyer vers le serveur Web demandé. L'action de l'utilisateur sur le navigateur se traduit par la saisie d'une adresse URL dans le navigateur ou encore par l'activation par l'utilisateur d'un lien hypertexte.

Le marquage de la requête par le navigateur consiste selon un mode de réalisation préféré de l'invention à ajouter un champ spécifique dans l'en-tête HTTP de la requête. L'en-tête HTTP ajoutée peut par exemple être de la forme suivante :
« X-UserAction : explicit »

En revanche, les requêtes suivantes implicitement envoyées par le navigateur et correspondant typiquement à des objets référencés dans le contenu de la réponse HTTP reçue, ne seront pas marquées par le navigateur.

Un second mode de réalisation est décrit en référence à la figure 2, dans lequel la fonction de marquage des requêtes HTTP explicites est déportée vers un dispositif intégré au réseau.

Un tel dispositif selon l'invention comprend un équipement de réseau 30, apte à recevoir des requêtes HTTP du dispositif client 10 et à les transmettre vers le serveur Web 20, ainsi qu'à recevoir les réponses HTTP correspondantes du serveur Web 20 et à les transmettre vers le dispositif client 10. l'équipement de réseau 30 peut être un serveur proxy. Il peut également être un routeur, un commutateur ou tout autre équipement assurant une fonction équivalente.

Le dispositif selon l'invention comprend également un module 50 de traitement des réponses HTTP reçues du serveur Web 20 par le serveur proxy 30. Le module de traitement des réponses 50 comprend des moyens pour déterminer les adresses URL correspondant à des objets inclus dans les réponses HTTP susceptibles de conduire à des requêtes HTTP implicites du navigateur du dispositif client. Une fois ces adresses déterminées, le module 50 les extrait et les écrit dans une base de données 60 prévue pour mémoriser ces adresses URL.

Le dispositif selon l'invention comprend également un module 40 de traitement des requêtes HTTP reçues du dispositif client 10 par le serveur proxy 30, comprenant des moyens pour marquer les requêtes si elles ne sont pas référencées dans la base de données 60. La base de données 60 comprend donc des moyens de liaison avec les modules de traitement 40 et 50.

Selon un premier exemple de réalisation, les fonctions mises en oeuvre par les modules 40 et 50 peuvent être implémentées directement sur le serveur proxy 30.

Selon un autre exemple de réalisation, les fonctions de traitement des requêtes et des réponses HTTP sont déportées du serveur proxy vers un serveur iCAP. Avantageusement, le module de traitement des requêtes HTTP est implémenté sur un premier serveur iCAP1, et le module de traitement des réponses HTTP est implémenté sur un second serveur iCAP2.

Ainsi, la communication entre le serveur Proxy 30 et les modules de traitement 40 et 50 est basée sur un protocole d'adaptation de contenu de type iCAP, acronyme anglais de « Internet Content Adaptation Protocol », défini par un groupe de sociétés dans le cadre de l'iCAP forum. L'utilisation de serveurs iCAP pour implémenter les modules 40 et 50 permet ainsi de travailler avec un serveur proxy quelconque, du fait du protocole de communication générique mis en oeuvre.

Le dispositif intégré au réseau, associant le serveur proxy 30, les modules de traitement 40 et 50, implémentés dans l'exemple de réalisation par les serveurs iCAP1 et iCAP2, et la base de données 60 met en oeuvre, comme il sera vu maintenant plus en détail, une analyse croisée entre les requêtes et les réponses HTTP correspondantes, permettant d'effectuer une distinction entre les requêtes explicites et les requêtes implicites.

Ainsi, le mécanisme de distinction des requêtes suit les étapes suivantes, en référence à la figure 2 :

Le serveur proxy 30 reçoit 61 la première requête du dispositif client 10 identifié par son adresse IP (IP1) .

Le serveur proxy transmet 62 cette requête au serveur iCAP1 40, ainsi que l'adresse IP (IP1) du dispositif client.

Le serveur iCAP1 vérifie 63 dans la base de données 60 si cette requête est référencée dans la base de données pour cette adresse IP. En fait, comme il s'agit d'une première requête reçue d'un nouveau client, celle-ci n'est pas référencée et le serveur iCAP1 effectue un marquage de la requête. Plus particulièrement, il insère un champ spécifique dans l'en-tête HTTP de la requête, par exemple l'en-tête HTTP ajoutée peut être de la forme suivante :
« X-UserAction : explicit »

Le serveur iCAP1 transmet 64 alors la requête marquée au serveur proxy 30.

Le serveur proxy 30 transmet 65 cette requête au serveur Web 20, ou d'une manière générale au travers des éléments suivants du réseau jusqu'au serveur 20.

Le serveur proxy 30 reçoit 66 la réponse HTTP à cette requête et la transmet 67 au serveur iCAP2 , ainsi que l'adresse IP IP1 du dispositif client 10.

Le serveur iCAP2 analyse cette réponse et extrait du document, s'il s'agit d'un document textuel exploitable par le navigateur (page HTML, liste de fichiers dans un répertoire...), les liens vers les objets inclus dans l'objet que constitue la réponse, qui sont susceptibles de provoquer des requêtes implicites générées par le navigateur du dispositif client 10 à la réception par celui-ci de la réponse. Ces objets inclus sont référencés dans la réponse notamment par un code HTML de type « IMG » ou « SRC ». Les liens extraits par le serveur iCAP2 sont constitués par les adresses URL complètes vers les objets inclus.

Le serveur iCAP2 ajoute 68 alors dans la base de données 60 pour l'adresse IP IP1, la liste des adresses URL vers les objets inclus et, pour chaque adresse ajoutée dans la base, génère de préférence une date de péremption associée dans la base, par exemple de l'ordre de la trentaine de secondes. La base de données 60 contient donc des entrées du type suivant :
[Adresse IP du client (IP1)| URL | date de péremption]

Une fois ces opérations effectuées, le serveur iCAP2 50 retourne 69 la réponse au serveur proxy 30, qui la transmet 70 au dispositif client 10.

Le dispositif client reçoit la réponse et émet des requêtes suivantes, pour lesquelles le procédé de distinction décrit précédemment selon les étapes 61 à 70 se répète. Le mécanisme tourne en boucle tant que le dispositif client est connecté. Les requêtes suivantes émises correspondent éventuellement aux objets inclus dans la réponse précédemment reçue.

Ainsi, le serveur proxy 30 reçoit 61 une requête suivante du dispositif client 10 identifié par son adresse IP IP1, et transmet 62 cette requête suivante au serveur iCAP1, ainsi que l'adresse IP1 du client.

Le serveur iCAP1 vérifie 63 alors dans la base de données 60 si cette requête est référencée dans la base de données pour cette adresse IP. Si elle ne l'est pas, cela signifie que la requête ne correspond à aucune adresse URL précédemment mémorisée dans la base pour cette adresse IP et donc qu'il s'agit d'une requête explicite de l'utilisateur. Le serveur iCAP1 insère alors le champ spécifique « X-UserAction : explicit » dans l'en-tête HTTP de la requête, signifiant qu'il s'agit d'une requête explicite de l'utilisateur..

En revanche, si la requête est référencée dans la base et que la date de péremption associée n'est pas dépassée, le serveur iCAP1 ne marque pas la requête.

La requête est alors retournée 64 au serveur proxy 30 et le procédé de distinction se poursuit selon les étapes déjà décrites tant que le client est connecté.

Parallèlement, un processus de nettoyage de la base de données 60 est mis en oeuvre, consistant à éliminer toutes les adresses URL de la base dont la date de péremption est atteinte. Ce processus permet non seulement de maintenir une taille de base de données raisonnable, mais aussi d'éliminer toute référence à un dispositif client qui n'est plus connecté.

Ainsi, l'ajout d'un marquage spécifique par le navigateur ou un système intégré au réseau lorsque la requête HTTP suit une action explicite de l'utilisateur permet d'obtenir un niveau d'information très fin sur le parcours de l'utilisateur et ses actions réelles.

Cette distinction des requêtes explicitement demandées par l'utilisateur obtenues grâce à l'invention permet donc de mettre en oeuvre plusieurs services à valeur ajoutée. Au niveau du fournisseur d'accès à l'Internet, un service d'analyse et de suivi des requêtes explicites des utilisateurs peut ainsi être capable de tracer les URLs effectivement demandées par un utilisateur pour générer un arbre de navigation explicite de l'utilisateur. Le profil des utilisateurs ainsi obtenu peut alors être valorisé, notamment auprès des fournisseurs de publicités.

Des service de gestion de présence au niveau applicatif peuvent également être mis en oeuvre. Par exemple, si l'on souhaite savoir quelle est la dernière URL demandée effectivement par l'utilisateur (et non le navigateur) pour, en fonction de cette URL, lui envoyer certaines informations.

Egalement, au niveau des fichiers d'historique des serveurs Web, un service de valorisation peut suivre le cheminement des requêtes explicites des utilisateurs pour en déduire par exemple un positionnement approprié des publicités ou encore proposer des modifications permettant un accès plus rapide aux données.

L'ensemble de la description ci-dessus a été faite dans un contexte où la communication entre le dispositif client et le serveur est basée sur l'utilisation du protocole HTTP. Toutefois, il convient de noter que la présente invention peut s'appliquer à d'autres protocoles, émergents et à venir, pour lesquels le problème d'une distinction entre requêtes explicites et requêtes implicites se pose.

## Revendications

1. Procédé de gestion de requêtes HTTP émises sur un réseau de télécommunication d'un dispositif client (10) équipé d'un navigateur vers un serveur Web (20), **caractérisé en ce qu'**il comprend une étape consistant à effectuer une distinction entre les requêtes émises explicitement par un utilisateur par l'intermédiaire du navigateur du dispositif client et les requêtes émises implicitement par le navigateur du dispositif client, ladite étape comprenant le marquage des requêtes http émises explicitement par l'utilisateur.

2. Procédé selon la revendication 1, **caractérisé en ce qu'**une requête HTTP émise explicitement par l'utilisateur correspond à la saisie par l'utilisateur d'une adresse URL dans le navigateur ou à une activation d'un lien hypertexte effectuée par l'utilisateur.

3. Procédé selon la revendication 1 ou 2, **caractérisé en ce que** le marquage des requêtes HTTP est réalisé par le navigateur du dispositif client.

4. Procédé selon la revendication 1 ou 2, **caractérisé en ce que** le marquage des requêtes HTTP est réalisé par un service intégré au réseau.

5. Procédé selon la revendication 4, **caractérisé en ce que** le service intégré au réseau met en oeuvre les étapes suivantes consistant à :
a- recevoir (61) une requête HTTP du dispositif client (10) ;
b- marquer ladite requête ;
c- transmettre (65) ladite requête vers le serveur (20) ;
d- recevoir (66) la réponse HTTP correspondante du serveur ;
e- mémoriser (68) dans une base de données (60) les URL correspondant à des objets inclus dans ladite réponse susceptibles de conduire à des requêtes HTTP demandées implicitement par le navigateur ;
f- transmettre (70) ladite réponse au dispositif client et,
g- pour chaque requête HTTP suivante reçue du dispositif client et non référencée dans ladite base de données, réitérer les étapes b à g.

6. Procédé selon la revendication 5, **caractérisé en ce qu'**une date de péremption est associée à chaque URL mémorisée dans la base de données (60), et **en ce qu'**on supprime toutes les URL dans la base de données (60) dont la date de péremption associée est dépassée.

7. Procédé selon la revendication 5 ou 6, **caractérisé en ce que** l'adresse IP du dispositif client (10) est associée à chaque URL mémorisée dans la base de données.

8. Procédé selon l'une quelconque des revendications 1 à 7, **caractérisé en que** le marquage des requêtes HTTP consiste en l'ajout d'un en-tête spécifique dans lesdites requêtes HTTP.

9. Dispositif de distinction de requêtes HTTP émises sur un réseau de télécommunication d'un dispositif client (10) équipé d'un navigateur vers un serveur Web (20), comprenant un équipement de réseau (30) apte à recevoir des requêtes HTTP du dispositif client et à les transmettre vers le serveur Web et à recevoir les réponses correspondantes du serveur et à les transmettre vers le dispositif client, ledit dispositif étant **caractérisé en ce qu'**il comprend :
- un module (50) de traitement des réponses reçues du serveur Web (20) par ledit équipement de réseau (30), comprenant des moyens pour déterminer les URL correspondant à des objets inclus dans lesdites réponses susceptibles de conduire à des requêtes HTTP demandées implicitement par le navigateur,
- une base de données (60) pour mémoriser lesdites URL, et
- un module (40) de traitement des requêtes reçues du dispositif client (10) par ledit équipement de réseau (30), comprenant des moyens pour marquer lesdites requêtes si elles ne sont pas référencées dans ladite base de données (60).

10. Dispositif selon la revendication 9, **caractérisé en ce que** le module de traitement (40) des requêtes HTTP comprend un serveur iCAP.

11. Dispositif selon la revendication 9 ou 10, **caractérisé en ce que** le module de traitement (50) des réponses HTTP comprend un serveur iCAP.

12. Programme d'ordinateur pour la mise en oeuvre du procédé de gestion de requêtes HTTP selon l'une quelconque des revendications 1 à 3.

13. Serveur Web apte à recevoir des requêtes HTTP émises sur un réseau de télécommunication à partir d'un dispositif client (10), **caractérisé en ce que**, les requêtes HTTP reçues comprenant un marquage spécifique selon qu'elles correspondent ou non à une requête émise explicitement par l'utilisateur du dispositif client, ledit serveur comprend des moyens aptes à distinguer, sur la base dudit marquage, une requête émise implicitement d'une requête émise explicitement.

14. Programme d'ordinateur destiné à être mis en oeuvre sur un serveur (20) apte à recevoir des requêtes HTTP émises sur un réseau de télécommunication à partir d'un dispositif client (10), **caractérisé en ce que,** les requêtes HTTP reçues comprenant un marquage spécifique selon qu'elles correspondent ou non à une requête émise explicitement par l'utilisateur du dispositif client, ledit programme permet d'effectuer une distinction côté serveur entre les requêtes émises explicitement et les requêtes émises implicitement, sur la base dudit marquage.

15. Navigateur destiné à être incorporé dans un dispositif client (10), ce navigateur étant **caractérisé en ce qu'**il comporte des moyens pour marquer les requêtes http émises explicitement par un utilisateur dudit dispositif client, sur un réseau de télécommunication, vers un serveur web (20).

16. Dispositif client (10) apte à émettre sur un réseau de télécommunication des requêtes http vers un serveur web (20), ce dispositif étant **caractérisé en ce qu'**il comporte un navigateur selon la revendication 15.

## Claims

1. Method for managing HTTP requests sent over a telecommunication network from a client device (10) equipped with a browser to a Web server (20), **characterized in that** it comprises a step consisting in distinguishing between the requests sent explicitly by a user by way of the browser of the client device and the requests sent implicitly by the browser of the client device, said step comprising the marking of the http requests sent explicitly by the user.

2. Method according to Claim 1, **characterized in that** an HTTP request sent explicitly by the user corresponds to the inputting by the user of a URL address into the browser or to a hypertext link activation performed by the user.

3. Method according to Claim 1 or 2, **characterized in that** the marking of the HTTP requests is carried out by the browser of the client device.

4. Method according to Claim 1 or 2, **characterized in that** the marking of the HTTP requests is carried out by a service integrated into the network.

5. Method according to Claim 4, **characterized in that** the service integrated into the network implements the following steps consisting in:
a- receiving (61) an HTTP request from the client device (10);
b- marking said request;
c- transmitting (65) said request to the server (20);
d- receiving (66) the corresponding HTTP response from the server;
e- storing (68) in a database (60) the URLs corresponding to objects included in said response and which may lead to HTTP requests made implicitly by the browser;
f- transmitting (70) said response to the client device and,
g- for each following HTTP request received from the client device and not referenced in said database, repeating steps b to g.

6. Method according to Claim 5, **characterized in that** an expiry date is associated with each URL stored in the database (60), and **in that** all the URLs in the database (60) whose associated expiry date has passed are deleted.

7. Method according to Claim 5 or 6, **characterized in that** the IP address of the client device (10) is associated with each URL stored in the database.

8. Method according to any one of Claims 1 to 7, **characterized in that** the marking of the HTTP requests consists of the addition of a specific header to said HTTP requests.

9. Device for distinguishing HTTP requests sent over a telecommunication network from a client device (10) equipped with a browser to a Web server (20), comprising network equipment (30) able to receive HTTP requests from the client device and to transmit them to the Web server and to receive the corresponding responses from the server and to transmit them to the client device, said device being **characterized in that** it comprises:
- a module (50) for processing the responses received from the Web server (20) by said network equipment (30), comprising means for determining the URLs corresponding to objects included in said responses and which may lead to HTTP requests made implicitly by the browser,
- a database (60) for storing said URLs, and
- a module (40) for processing the requests received from the client device (10) by said network equipment (30), comprising means for marking said requests if they are not referenced in said database (60).

10. Device according to Claim 9, **characterized in that** the module (40) for processing the HTTP requests comprises an iCAP server.

11. Device according to Claim 9 or 10, **characterized in that** the module (50) for processing the HTTP responses comprises an iCAP server.

12. Computer program for implementing the method for managing HTTP requests according to any one of Claims 1 to 3.

13. Web server able to receive HTTP requests sent over a telecommunication network from a client device (10), **characterized in that,** the HTTP requests received comprising a specific marking depending on whether they do or do not correspond to a request sent explicitly by the user of the client device, said server comprises means able to distinguish, on the basis of said marking, a request sent implicitly from a request sent explicitly.

14. Computer program intended to be implemented on a server (20) able to receive HTTP requests sent over a telecommunication network from a client device (10), **characterized in that,** the HTTP requests received comprising a specific marking depending on whether they do or do not correspond to a request sent explicitly by the user of the client device, said program makes it possible to distinguish, server side, between the requests sent explicitly and the requests sent implicitly, on the basis of said marking.

15. Browser intended to be incorporated into a client device (10), this browser being **characterized in that** it comprises means for marking the http requests sent explicitly by a user of said client device, over a telecommunication network, to a web server (20).

16. Client device (10) able to send http requests to a web server (20) over a telecommunication network, this device being **characterized in that** it comprises a browser according to Claim 15.

## Patentansprüche

1. Verfahren zur Verwaltung von HTTP-Anforderungen, die in einem Telekommunikationsnetz von einer mit einem Browser ausgestatteten Client-Vorrichtung (10) an einen Internetserver (20) gesendet werden, **dadurch gekennzeichnet, dass** es einen Schritt enthält, der darin besteht, eine Unterscheidung zwischen den explizit von einem Benutzer über den Browser der Client-Vorrichtung gesendeten Anforderungen und den implizit vom Browser der Client-Vorrichtung gesendeten Anforderungen durchzuführen, wobei der Schritt die Markierung der explizit vom Benutzer gesendeten HTTP-Anforderungen enthält.

2. Verfahren nach Anspruch 1, **dadurch gekennzeichnet, dass** eine explizit vom Benutzer gesendete HTTP-Anforderung der Eingabe einer URL-Adresse in den Browser durch den Benutzer oder einer vom Benutzer durchgeführten Aktivierung eines Hypertext-Links entspricht.

3. Verfahren nach Anspruch 1 oder 2, **dadurch gekennzeichnet, dass** die Markierung der HTTP-Anforderungen vom Browser der Client-Vorrichtung durchgeführt wird.

4. Verfahren nach Anspruch 1 oder 2, **dadurch gekennzeichnet, dass** die Markierung der HTTP-Anforderungen von einem in das Netz integrierten Dienst durchgeführt wird.

5. Verfahren nach Anspruch 4, **dadurch gekennzeichnet, dass** der in das Netz integrierte Dienst die folgenden Schritte ausführt, die darin bestehen:
a- eine HTTP-Anforderung von der Client-Vorrichtung (10) zu empfangen (61);
b- die Anforderung zu markieren;
c- die Anforderung zum Server (20) zu übertragen (65);
d- die entsprechende HTTP-Antwort vom Server zu empfangen (66);
e- in einer Datenbank (60) die URL zu speichern (68), die in der Antwort enthaltenen Objekten entsprechen, welche zu implizit vom Browser angeforderten HTTP-Anforderungen führen können;
f- die Antwort an die Client-Vorrichtung zu übertragen (70); und
g- für jede folgende von der Client-Vorrichtung empfangene und nicht in der Datenbank referenzierte HTTP-Anforderung die Schritte b bis g zu wiederholen.

6. Verfahren nach Anspruch 5, **dadurch gekennzeichnet, dass** jeder in der Datenbank (60) gespeicherten URL ein Verfallsdatum zugeordnet ist, und dass alle URL in der Datenbank (60) gelöscht werden, deren Verfallsdatum abgelaufen ist.

7. Verfahren nach Anspruch 5 oder 6, **dadurch gekennzeichnet, dass** die IP-Adresse der Client-Vorrichtung (10) jeder in der Datenbank gespeicherten URL zugeordnet wird.

8. Verfahren nach einem der Ansprüche 1 bis 7, **dadurch gekennzeichnet, dass** die Markierung der HTTP-Anforderungen aus der Hinzufügung einer spezifischen Kopfzeile in die HTTP-Anforderungen besteht.

9. Vorrichtung zur Unterscheidung von HTTP-Anforderungen, die in einem Telekommunikationsnetz von einer mit einem Browser ausgestatteten Client-Vorrichtung (10) an einen Internetserver (20) gesendet werden, die eine Netzausrüstung (30) aufweist, welche HTTP-Anforderungen von der Client-Vorrichtung empfangen und an den Internetserver übertragen und die entsprechenden Antworten des Servers empfangen und an die Client-Vorrichtung übertragen kann, wobei die Vorrichtung **dadurch gekennzeichnet ist, dass** sie enthält:
- ein Verarbeitungsmodul (50) der vom Internetserver (20) über die Netzausrüstung (30) empfangenen Antworten, das Einrichtungen enthält, um die URL zu bestimmen, die in den Antworten enthaltenen Objekten entsprechen, welche zu implizit vom Browser angeforderten HTTP-Anforderungen führen können,
- eine Datenbank (60), um die URL zu speichern, und
- ein Verarbeitungsmodul (40) der von der Client-Vorrichtung (10) über die Netzausrüstung (30) empfangenen Anforderungen, das Einrichtungen enthält, um die Anforderungen zu markieren, wenn sie nicht in der Datenbank (60) referenziert sind.

10. Vorrichtung nach Anspruch 9, **dadurch gekennzeichnet, dass** das Verarbeitungsmodul (40) der HTTP-Anforderungen einen iCAP-Server enthält.

11. Vorrichtung nach Anspruch 9 oder 10, **dadurch gekennzeichnet, dass** das Verarbeitungsmodul (50) der HTTP-Antworten einen iCAP-Server enthält.

12. Computerprogramm zur Durchführung des Verfahrens zur Verwaltung von HTTP-Anforderungen nach einem der Ansprüche 1 bis 3.

13. Internetserver, der in einem Telekommunikationsnetz ausgehend von einer Client-Vorrichtung (10) gesendete HTTP-Anforderungen empfangen kann, **dadurch gekennzeichnet, dass,** da die empfangenen HTTP-Anforderungen eine spezifische Markierung enthalten, je nachdem, ob sie einer explizit von dem Benutzer der Client-Vorrichtung gesendeten Anforderung entsprechen oder nicht, der Server Einrichtungen enthält, die auf der Basis der Markierung eine implizit gesendete Anforderung von einer explizit gesendeten Anforderung unterscheiden können.

14. Computerprogramm, das dazu bestimmt ist, in einem Server (20) ausgeführt zu werden, der in einem Telekommunikationsnetz ausgehend von einer Client-Vorrichtung (10) gesendete HTTP-Anforderungen empfangen kann, **dadurch gekennzeichnet, dass,** da die empfangenen HTTP-Anforderungen eine spezifische Markierung enthalten, je nachdem, ob sie einer explizit von dem Benutzer der Client-Vorrichtung gesendeten Anforderung entsprechen oder nicht, das Programm es ermöglicht, serverseitig auf der Basis der Markierung eine Unterscheidung zwischen den explizit und den implizit gesendeten Anforderungen durchzuführen.

15. Browser, der dazu bestimmt ist, in eine Client-Vorrichtung (10) eingebaut zu werden, wobei dieser Browser **dadurch gekennzeichnet ist, dass** er Einrichtungen aufweist, um die in einem Telekommunikationsnetz von einem Benutzer der Client-Vorrichtung explizit an einen Internetserver (20) gesendeten HTTP-Anforderungen zu markieren.

16. Client-Vorrichtung (10), die in einem Telekommunikationsnetz HTTP-Anforderungen an einen Internetserver (20) senden kann, wobei diese Vorrichtung **dadurch gekennzeichnet ist, dass** sie einen Browser nach Anspruch 15 aufweist.
